Europäisches Patentamt

(19) European Patent Office

Office européen des brevets

(11) Publication number: **0 051 973**
**B1**

(12) **EUROPEAN PATENT SPECIFICATION**

(45) Date of publication of patent specification: **14.05.86**

(21) Application number: **81305232.1**

(22) Date of filing: **04.11.81**

(51) Int. Cl.⁴: **B 62 L 3/02,** B 62 K 23/06

(54) **Brake control device.**

(30) Priority: **06.11.80 JP 159258/80 u**
**06.11.80 JP 159259/80 u**
**06.11.80 JP 159260/80 u**

(43) Date of publication of application:
**19.05.82 Bulletin 82/20**

(45) Publication of the grant of the patent:
**14.05.86 Bulletin 86/20**

(84) Designated Contracting States:
**BE DE FR GB IT**

(56) References cited:
**EP-A-0 043 213**
**DE-C- 502 132**
**DE-C-1 006 743**
**FR-A-1 539 632**
**GB-A-1 561 102**

(73) Proprietor: **SHIMANO INDUSTRIAL COMPANY LIMITED**
**77, 3-cho Oimatsu-cho Sakai-shi**
**Osaka (JP)**

(72) Inventor: **Shimano, Keizo**
**81, 3-cho, Midorigaokaminami-machi**
**Sakai-shi Osaka (JP)**

(74) Representative: **Szczuka, Jan Tymoteusz et al**
**Cruikshank & Fairweather 19 Royal Exchange Square**
**Glasgow G1 3AE Scotland (GB)**

Courier Press, Leamington Spa, England.

## Description

This invention relates to a brake control device for a brake mechanism of a cycle, comprising a control level pivotally mounted in a hollow bracket member comprising a front wall, a rear wall, a pair of side walls, and an upper wall; and a clamping means for securing said bracket member to said handlebar in use of the device, said control lever having a support means for holding, in use, one end of a control wire remote from another end of said control wire securable to a said brake mechanism and said bracket member having support means for an outer stop for the outer sheath of a said control wire.

In general, brake control devices for use on drop-type handlebars comprise a control lever pivotally mounted via a pivot shaft in a bracket member secured to the handlebars, a retainer secured to one end of a control wire and connected to the control lever, a through bore being provided in an upper portion of a front wall of the bracket member, through which bore the control wire is passed and which bore supports an outer stop for an outer sheath guiding the wire.

GB—A—1 561 102 discloses such a brake control device for a brake mechanism of a cycle, comprising a control lever pivotally mounted in a hollow bracket member comprising a front wall, a rear wall, a pair of side walls, and an upper wall; and a clamping means formed and arranged for engagement with a mounting means provided on said bracket member for securing said bracket member to a handlebar in use of the device; said control lever having a support means for holding, in use, one end of a control wire remote from an other end of said control wire securable to a said brake mechanism, said control wire support means including a retaining bore for receiving and holding, in use, the retainer head for the control wire, a wire-receiving bore for receiving said control wire therethrough, said wire-receiving bore being smaller in diameter than said retaining bore and said retainer head, said retaining bore and wire receiving bore being open to one side in a radially outward direction; and said bracket member having support means for an outer stop for the outer sheath of said control wire.

With this type of construction, due to the impossibility of bending the control wire and outer sheath through a small radius of curvature to enable them to be led along the handlebar, the control wire and sheath project substantially in a direction outwardly of the handlebars thereby giving rise to a problem of interference with the freedom of movement of a rider.

From time to time a rider wishes to steer the cycle while gripping the bracket member of the .brake control device mounted on the arcuate portion of the handlebars, so that the bracket member together with a cover therefor would desirably be designed for maximum ease and comfort of gripping. With the conventional form of construction however, the control wire and outer sheath are led out from the front wall of the bracket member and the stop therefor projects from said front wall. As a result a substantial constraint on the freedom of design of this type of construction is imposed thereby making more difficult the solution of such other problems.

Furthermore, when it is desired to replace the control wire it is a relatively difficult and time-consuming operation to disconnect the control wire from the retainer and draw it out of the bracket member even once the retainer has been removed from the control lever.

FR—A—1 539 632 discloses a brake control device having a control wire extending from a brake control lever directly into the interior of the handlebar. There is however no disclosure of a brake control device with a bracket member suitable for securing to a conventional handlebar nor of any means for facilitating replacement of the control wire.

It is an object of the present invention to overcome or minimise one or more of the above-mentioned disadvantages and to provide a brake control device for a cycle which is of relatively simple construction and allows the control wire and outer sheath to be readily extended along the handlebar.

The present invention provides a brake control device for a brake mechanism of a cycle, comprising a control lever pivotally mounted in a hollow bracket member comprising a front wall, a rear wall, a pair of side walls and an upper wall; and a clamping means formed and arranged for engagement with a mounting means provided on said bracket member for securing said bracket member to a handlebar in use of the device; said control lever having a support means for holding, in use, one end of a control wire remote from an other end of said control wire securable to a said brake mechanism said control wire support means including a retaining bore for receiving and holding, in use, the retainer head of the control wire, a wire-receiving bore for receiving said control wire therethrough, said wire-receiving bore being smaller in diameter than said retaining bore and said retainer head, said retaining bore and wire receiving bore being open to one side in a radially outward direction; and said bracket member having support means for an outer stop for the outer sheath of said control wire characterised in that said control wire sheath support means is formed and arranged for supporting said outer sheath stop so that said control wire outer sheath and said control wire therein can extend within said bracket member substantially directly towards the bottom of said bracket member at which said bracket member is secured to said handlebar so that when said device is secured, in use, to an arcuate handlebar portion, said control wire and sheath can extend from the interior of the bracket member directly into the interior of the handlebar without any abrupt change of direction therealong, said control wire sheath support means being also provided with a guide means in proximity to a through bore in said sheath support means through which the control wire extends from the outer stop of the sheath towards said control lever, said through bore being larger in diameter than the control wire retainer head and said guide means being formed and arranged for guiding said retainer head of said control wire and said outer sheath stop into said through bore in said sheath support means during insertion of said control wire and sheath for connection of the control wire to the brake control lever.

Thus with a brake control device of the invention, the control wire and outer sheath can extend arcing naturally along the handle without projecting substantially in a direction outwardly of the handlebar as in the case of conventional devices. Moreover, the use of the mounting member for supporting the outer stop for the control wire sheath avoids the need for any complex or expensive form of construction.

Owing to the fact that the mounting member supports the control wire sheath stop in a through bore which is larger in diameter than a retainer head attached to the one end of the control wire, the control wire with its retainer head can be inserted into the bracket member from the lower side thereof, i.e., from the handlebar side, and passed through said through bore to be then engaged in the support means provided on the control lever. Desirably also the upper wall of the bracket member opposite the support member is provided with a wire drawing-out bore of larger diameter than the retainer head. Pushing out the wire so that the retainer head comes out of the wire drawing-out bore, enables the control wire to be readily withdrawn from its outer sheath and the device. Thus installation of a control wire and sheath thereof in the brake control device and replacement of a control wire alone are significantly simplified.

Further preferred features and advantages of the present invention will appear from the following detailed description given by way of example of some preferred embodiments illustrated with reference to the accompanying drawings in which:

Fig. 1 is a longitudinal section of a first embodiment of a brake control device of the invention;

Fig. 2 is a perspective view of the mounting member used in the device of Fig. 1;

Fig. 3 is a perspective view of the bracket member of the device of Fig. 1;

Fig. 4 is a vertical section taken on the line IV—IV in Fig. 1;

Fig. 5 is a horizontal section taken on the line V—V in Fig. 1;

Fig. 6 is another horizontal section taken this time on the line VI—VI in Fig. 1;

Fig. 7 is a partial plan view of the bracket member of the device of Fig. 1 with the bracket cover removed;

Fig. 8 is a perspective view of a guide used in the device of Fig. 1;

Fig. 9 is a detail sectional view of part of the bracket member, showing a guide mounting portion thereof;

Fig. 10 is a detail perspective view illustrating the relative dispositions of the guide and of a control wire with its outer sheath;

Fig. 11 is a longitudinal sectional view corresponding to Fig. 1, showing insertion of the control wire and its outer sheath in the bracket member.

In the following description, descriptions in terms of upper and lower and front and rear refer to the embodiments as viewed in the drawings, and are used for convenience only, it being appreciated that other dispositions in three-dimensioned space may occur in practice when devices of the invention are mounted on cycle handlebars.

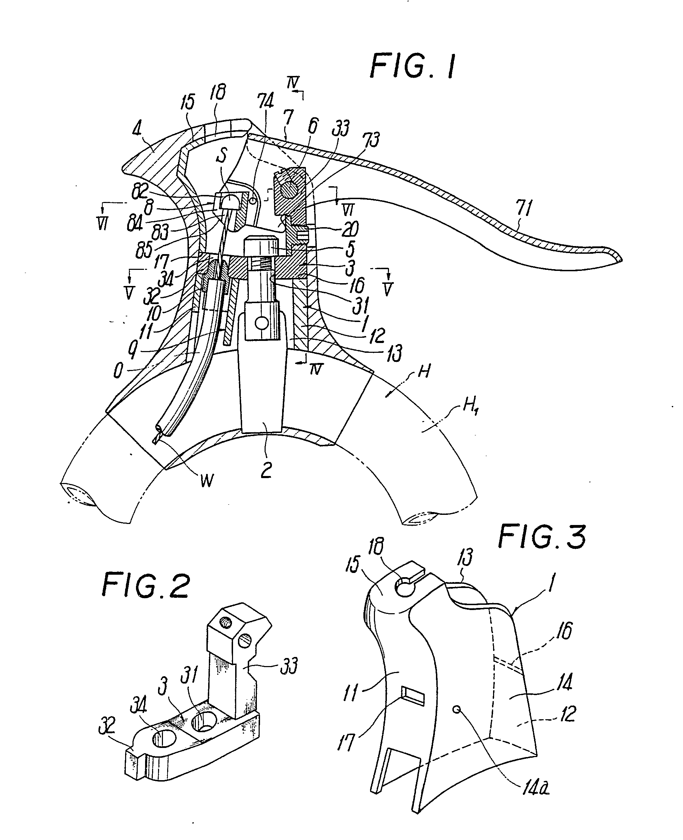

Fig. 1 shows a bracket member 1 secured by a clamping band 2 to a generally U-shaped arcuate cranked portion $H_1$ of a drop-type handlebars $H$ which comprises two cranked portions $H_1$ and an intermediate straight portion (not shown). A mounting member 3 is mounted inside the bracket member 1 and together with the clamping band 2 secures the bracket member 1 on the handlebars $H$.

The bracket member 1 has a front wall 11, a rear wall 12, a pair of side walls 13 and 14 interconnecting the front and rear walls 11 and 12, and an upper wall 15, these walls 11—15 being covered by a bracket cover 4 formed of a soft synthetic resin shaped for ease and comfort of gripping. The rear wall 12 is provided at its upper portion with an aperture 16 (see Fig. 3), and the front wall 11 at a lengthwise intermediate portion thereof with a retaining bore 17, the aperture 16 and bore 17 serving to receive and support respective ends of the mounting member 3.

In more detail, the mounting member 3, as shown in Figs. 1 and 2, is in the form of a generally plate-like member, inclined upwardly at an acute angle towards a first end 32 which engages in the retaining bore 17 in the front wall 11 of the bracket member 1 and is provided at a generally lengthwise intermediate portion with a bore 31. At its other, second, end the mounting member locates in the aperture 16 and resting on top of the rear wall 12. A securing means in the form of a bolt or screw 5 is formed and arranged to tighten the clamping band 2 around the arcuate handlebars portion $H_1$ and simultaneously to force the mounting member downwardly (as viewed in Fig. 1) against the bracket member 1 clamping the latter onto said arcuate handlebars portion $H_1$. At its second end the mounting member 3 also has an integrally formed upstanding portion 33 which extends upwardly and generally towards the upper wall 15 of the bracket member 1 and pivotally supporting at an upper end portion a brake control lever 7 on a pivot shaft 6 mounted in a transverse bore. A finger-grip portion 71 of the brake control lever 7 projects outwardly through the aperture 16 and the other end of the control lever 7 extends forwardly of the pivot shaft 6 towards the front wall 11 of the bracket member 1. This front end holds a support member 8 which engages a retainer head $S$

attached to one end of a control wire *W* whose other end is connected to a brake at the front or rear wheel of a cycle (not shown) on which the device is mounted. In this way the control wire *W* is connected to the control lever 7.

A through bore 34 is provided on the inclined portion of the mounting member 3 opposite the support member 8, and receives therein part of a stop 10 for an outer sheath *O* for the control wire *W*, the wire *W* and outer sheath *O* extending generally alongside the inner surface of the front wall 11 of the bracket member and then being led out from a lower portion of the bracket member 1 to the handlebars *H*.

The bore 34 is made larger in size than the retainer *S* attached to the control wire *W* so that the retainer *S* can be inserted from below the bracket member 1 into the support member 8 via said bore 34.

The support member 8 is generally barrel-shaped and has at its outer surface a pair of stub axle-like stems 81 projecting therefrom in diametrically opposite directions, the stems 81 locating in respective ones of a pair of diametrically opposite bores 72 in said other end of the control lever 7, thereby pivotally mounting the support member 8 in said control lever end.

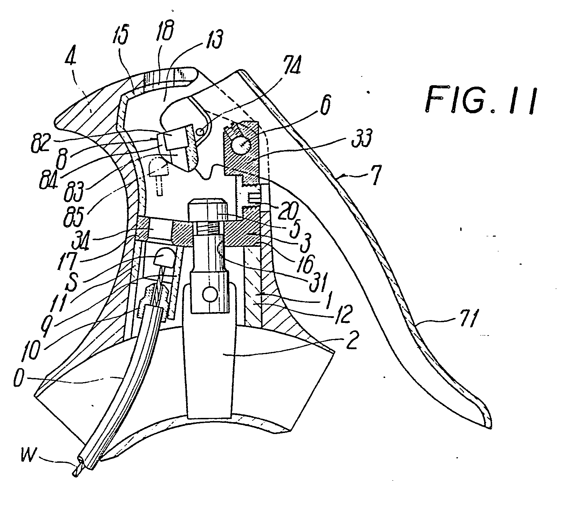

The support member 8 is also provided at the upper end portion with a retainer head bore 82 which receives therein and retains the retainer head *S* of the control wire and in its lower portion with a control wire receiving bore 83 which is smaller in diameter than the retaining bore 82 and retainer head *S*. The retaining bore 82 and control wire receiving bore 83 are open 84 to one side in a radially outward direction. The lower end of the support member 8 is inclined upwardly in the forward direction towards the front wall 11 of the bracket member 1 to provide an inclined guide surface 85 for the control wire retainer head *S* so that when the control wire *W* is inserted into the bracket member 1 from below the retainer head *S* travels upwardly through the mounting member bore 34 and over the inclined surface 85 as shown in Fig. 11, into a position in which the head *S* clears the end of the radial side opening 84 in the support member 8 whereupon the control wire *W* can pass through said radial side opening 84 and the retainer head move into position immediately above the retainer head bore 82 into which it can now pass readily upon retraction of the control wire *W*.

In addition a guide 9 is sandwiched between the side walls 13 and 14 of the bracket member 1 immediately below the mounting member 3 and serves to initially guide the retainer head *S* of the control wire *W* and the stop 10 for the outer sheath *O* through the bore 34 in the mounting member 3.

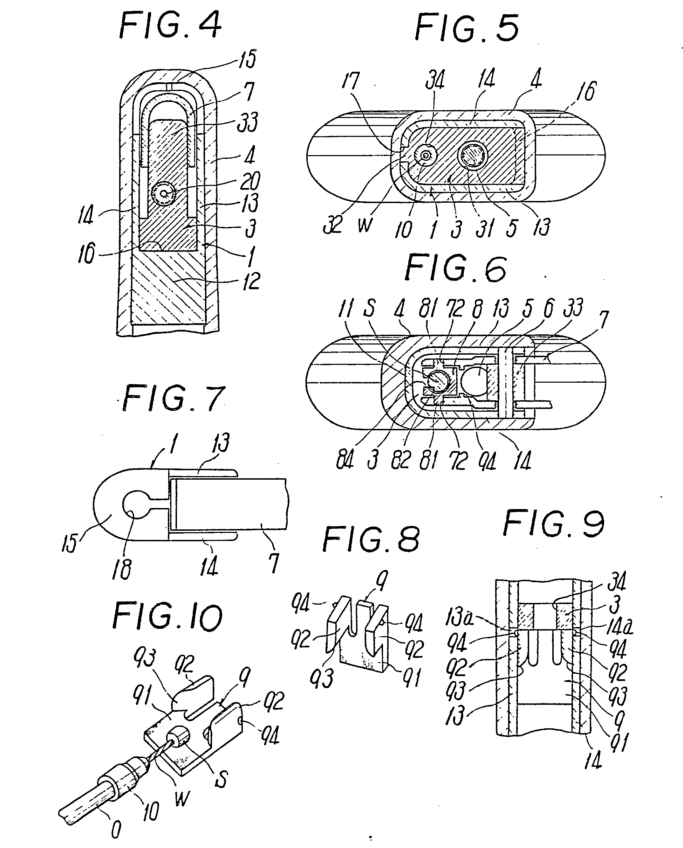

The guide 9, as shown in Figs. 8 to 10, is a generally channel-shaped body 91 with opposed walls 92 extending from either side of a connecting web portion, the walls 92 having at the lower ends of their inner surface arcuate part-cylindrical guide faces 93 and on their outer surface at upper ends thereof small projections 94, which engage small opposed bores 13a and 14a provided in the side walls 13 and 14 of the bracket member 1 to mount the guide 9 in said bracket member 1.

The bracket member 1 is also provided in its upper wall 15 opposite the support member 8 with an open-sided generally keyhole-shaped aperture 18 whose main portion is larger in diameter than the retainer *S* of the control wire *W* so that a control wire *W* can be readily exchanged by withdrawing the retainer head *S* of the control wire *W*, out from the bracket member 1 through the aperture 18.

The drawings also show an adjustable stop means 20 screw-threadedly engaged in the base of the upstanding portion 33 of the mounting member 3 with a stop face at an inwardly facing end in abutment with a nose 73 on said other end of the control lever 7 remote from the finger grip portion 73 and its other end having an outwardly facing tool-engaging recess. Said other end of the control lever 7 also has a stop pin 74 disposed for limiting pivotal movement of the support member 8.

In the abovedescribed control device of the invention the control wire *W* and outer sheath *O* thereof are inserted at one end into the bracket member 1 throuh the opening at the lower side thereof, i.e., from the handlebar *H* side. The retainer head *S* attached to the control lever end of the control wire *W* is at first guided by the guide 9 to pass through the through aperture 34 in the mounting member 3 and then guided to an offset position by the inclined surface 85 on the support 8 until the retained head *S* clears the narrow side opening 84 of the retainer head bore 82 whereupon the control wire *W* springs back through the side opening 84 and the retainer head *S* aligns axially with the retainer head bore 82 whereupon the latter can be drawn into the former. Next, the outer stop 10 is guided by the guide 9 to locate in the bore 34. The control wire *W* and outer sheath *O* thereof extend naturally and easily from the outer stop 10 and guide 9 along the handlebar *H* and are also simply connected to the control lever 7. The outer sheath *O* including the control wire *W*, upon exiting from the bracket member 1, are led inside the handlebar *H* through, for example, a bore formed therein and extend towards the brake mechanism through the interior of the handlebar *H*.

When it is desired to exchange the control wire *W* this is disconnected from the brake mechanism and then pushed out towards the upper wall 15 of the bracket member 1, so that the retainer head *S* disengages from the retainer head bore 82 and projects outwardly from the bracket member 1 through the key-hole aperture 18. The control wire *W* is then pulled right through by pulling on the retainer head *S*, or alternatively the retainer head *S* is cut off and the rest of the control wire *W* is pulled back through from the brake mechanism end, and separated from the outer sheath *O* thereof.

Next, a new wire is inserted at its brake mechanism connection end into the retainer head bore 82 and wire insertion bore 83 of the support member 8 via the keyhole aperture 18 in the upper wall 15 of the bracket member 1 and then inserted into the outer sheath O via the through bore 34 and outer stop 10, until said end of the control wire W projects from the other end of the outer sheath O and is then pulled out therefrom so that the retainer head S enters into the bracket member 1 via the aperture 18 and engages in the retainer head bore 82.

As will be apparent from the above, the brake control lever in the device of the invention is provided with a support member for holding one end of the control wire, the outer stop for the outer of the control wire being supported by a mounting member mounted in the bracket member, so that the control wire and outer sheath therefor can be led out from the under side, i.e. the handlebar side, of the bracket member, and then extend naturally along the handlebar without projecting substantially outwardly therefrom.

By using the mounting member through bore to support the outer stop for the control wire outer sheath there is obtained a relatively simple and inexpensive construction of brake control device. Also, the retainer head of the control wire can be drawn out through the bore only provided at the upper wall of bracket member, thereby enabling an easy and quick replacement of the control wire.

**Claims**

1. A brake control device for a brake mechanism of a cycle, comprising a control lever (7) pivotally mounted (6) in a hollow bracket member (1) comprising a front wall (11), a rear wall (12), a pair of side walls (13, 14), and an upper wall (15); and a clamping means (2, 5) formed and arranged for engagement with a mounting means (3) provided on said bracket member (1) for securing said bracket member (1) to a handlebar (H) in use of the device; said control lever (7) having a support means (8) for holding, in use, one end of a control wire (W) remote from an other end of said control wire (W) securable to a said brake mechanism said control wire support means (8) including a retaining bore (82) for receiving and holding, in use, the retainer head (S) of the control wire (W), a wire-receiving bore (83) for receiving said control wire (W) therethrough, said wire-receiving bore (83) being smaller in diameter than said retaining bore (82) and said retainer head (S), said retaining bore (82) and wire receiving bore (83) being open (84) to one side in a radially outward direction; and said bracket member (1) having support means (3) for an outer stop (10) for the outer sheath (O) of said control wire (W) characterised in that

said control wire sheath support means (3) is formed and arranged for supporting said outer sheath stop (10) so that said control wire outer sheath (O) and said control wire (W) therein can extend within said bracket member (1) substantially directly towards the bottom of said bracket member (1) at which said bracket member is secured to said handlebar (H) so that when said device is secured, in use, to an arcuate handlebar portion (H), said control wire (W) and sheath (O) can extend from the interior of the bracket member directly into the interior of the handlebar (H) without any abrupt change of direction therealong, said control wire sheath support means (3) being also provided with a guide means (9) in proximity to a through bore (34) in said sheath support means (3) through which the control wire (W) extends from the outer stop (10) of the sheath (O) towards said control lever (5), said through bore (34) being larger in diameter than the control wire retainer head (S) and said guide means (9) being formed and arranged for guiding said retainer head (S) of said control wire (W) and said outer sheath stop (10) into said through bore (34) in said sheath support means (3) during insertion of said control wire and sheath (W, O) for connection of the control wire (W) to the brake control lever (7).

2. A device according to claim 1 wherein said control wire sheath support means is disposed on said mounting means (3).

3. A device according to Claim 2, wherein said mounting means is in the form of a member (3) having an upstanding portion (33) extending towards the upper wall (15) of said bracket member (1), said control lever (7) being pivotally mounted on a control lever pivot shaft (6) supported by said mounting member (3).

4. A device according to Claim 2 or Claim 3 wherein said mounting means (3) is in the form of a generally plate-like member which is inclined upwardly towards a first end (32) adjacent the front wall (11) of said bracket member (1) the upwardly inclined portion being formed for supporting said outer sheath stop (10).

5. A device according to any one of Claims 1 to 4, wherein said control lever (7) is pivotally supported between the side walls (13, 14) of said bracket member (1) on a control lever pivot shaft (6).

6. A device according to any one of Claims 1 to 5 wherein the front wall (11) of said bracket member (1) has a retaining bore (17) and the rear wall (12) is provided with an aperture (16), said mounting means (3) being supported in said bracket member (1) by engagement with said retaining bore (17) and aperture (16), so that tightening of said clamping means (2, 5) secures said mounting member (3) in position relative to said front and rear walls (11, 12) whilst clamping said bracket member (1) with said mounting member (3) to the handlebar (H).

7. A device according to any one of Claims 1 to 6, wherein said control wire sheath support means through bore (34) is disposed in proximity to said front wall (11) of the bracket member (1) so that said control wire sheath (O) and control wire (W) extend, in use, along the inner surface of the front wall (11) of said bracket member (1).

8. A device according to any one of Claims 1 to 7 wherein the control wire support means (8) is provided on a support member (8) mounted on the control lever (7).

9. A device according to Claim 8, wherein said support member (8) is pivotally (81) mounted (72) on the control lever (7).

10. A device according to Claim 8 or Claim 9 wherein the upper wall (15) of said bracket member (1) has, in a position generally opposite said support member (9), a control wire-drawing-out aperture (18) larger in diameter than said control wire retainer head (S).

11. A device according to any one of Claims 8 to 10 wherein said support member (8) has on its underside an inclined surface (85) formed and arranged for guiding said retainer head (S) upon insertion of the control wire and sheath (W, O) for connection of the control wire (W) to the control lever (7) across and along the open side (84) of the wire receiving bore (83) and retaining bore (82) so that when said retainer head (S) clears the end of the side opening (84) the control wire (W) can pass therethrough into the wire receiving bore (83).

## Revendications

1. Dispositif de commande de frein pour un mécanisme de freinage d'un cycle, comprenant un levier de commande (7) monté de façon pivotante (6) dans un support creux (1) comportant une paroi avant (11), une paroi arrière (12), deux parois latérales (13, 14) et une paroi supérieure (15); et des moyens de serrage (2, 5) prévus et disposés pour s'engager avec une pièce de montage (3) prévue sur le support (1) de manière à fixer ce support (1) à un guidon (H) en utilisation du dispositif; le levier de commande (10) comportant des moyens de maintien (8) pour retenir, en utilisation, une extrémité d'un câble de commande (W) éloignée d'une autre extrémité du câble de commande (W) qui peut être fixée à un dit mécanisme de freinage, ces moyens de maintien (8) de câble de commande comprenant un logement de retenue (82) pour recevoir et retenir, en utilisation, la tête de retenue (S) du câble de commande (W), un orifice (83) de réception de câble dans lequel passe le câble de commande (W), l'orifice (83) de réception de câble ayant un diamètre plus petit que celui du logement de retenue (82) et de la tête de retenue (S), le logement de retenue (82) et l'orifice (83) de réception de câble étant ouverts (84) sur un côté dans une direction radiale vers l'extérieur; et le support (1) comportant des moyens de maintien (3) pour une pièce d'arrêt extérieure (10) de la gaine extérieure (O) du câble de commande (W), caractérisé en ce que lesdits moyens de maintien (3) de la gaine de câble de commande sont prévus et disposés pour supporter la pièce d'arrêt de gaine extérieure (10) de sorte que la gaine extérieure (O) de câble de commande et le câble de commande (W) placé à l'intérieur peuvent s'étendre dans le support (1) sensiblement directement vers la base du support (1) à l'endroit de laquelle le support est fixé au guidon (H), de manière à ce que, lorsque le dispositif est fixé, en utilisation, à une partie courbe du guidon (H), le câble de commande (W) et la gaine (O) puissent s'étendre de l'intérieur du support directement dans l'intérieur du· guidon (H) sans aucun changement brusque de direction sur ce trajet, lesdits moyens de maintien (3) de la gaine de câble de commande comportant également des moyens de guidage (9) à proximité d'un trou traversant (34) prévu dans les moyens de maintien de gaine (3) et à travers lequel le câble de commande (W) s'étend de la pièce d'arrêt extérieure (10) de la gaine (O) vers le levier de commande (5), ce trou traversant (34) ayant un diamètre supérieur à celui de la tête de retenue (S) du câble de commande, et lesdits moyens de guidage (9) étant prévus et disposés pour guider la tête de retenue (S) du câble de commande (W) et la pièce d'arrêt de gaine extérieure (10) dans le trou traversant (34) des moyens (3) de maintien de gaine, pendant l'insertion du câble de commande et de la gaine (W, O) pour la jonction du câble de commande (W) au levier de commande de frein (7).

2. Dispositif suivant la revendication 1, dans lequel les moyens de maintien de gaine de câble de commande sont situés sur lesdits moyens de montage (3).

3. Dispositif suivant la revendication 2, dans lequel les moyens de montage sont sous la forme d'une pièce (3) comportant une partie montante (33) dirigée vers la paroi supérieure (15) du support (1), le levier de commande (7) étant monté de façon pivotante sur un axe de pivot (6) de levier de commande, supporté par ladite pièce de montage (3).

4. Dispositif suivant la revendication 2 ou la revendication 3, dans lequel les moyens de montage (3) sont sous la forme d'une pièce sensiblement en forme de plaque qui est inclinée vers le haut, vers une première extrémité (32) adjacente à la paroi avant (11) du support (1), la partie inclinée vers le haut étant formée de manière à supporter ladite pièce d'arrêt de gaine extérieure 10.

5. Dispositif suivant l'une quelconque des revendications 1 à 4, dans lequel le levier de commande (7) est supporté de façon pivotante entre les parois latérales (13, 14) du support (1) sur un axe de pivot (6) de levier de commande.

6. Dispositif suivant l'une quelconque des revendications 1 à 5, dans lequel la paroi avant (11) du support (1) présente un orifice de retenue (17) et la paroi arrière (12) présente une ouverture (16), les moyens de montage (3) étant supportés dans le support (1) par engagement avec l'orifice de retenue (17) et l'ouverture (16), de sorte que le blocage des moyens de serrage (2, 5) fixe la pièce de montage (3) en position par rapport aux parois avant et arrière (11, 12) tout en bloquant le support (1) avec la pièce de montage (3) sur le guidon (H).

7. Dispositif suivant l'une quelconque des revendications 1 à 6, dans lequel l'orifice traversant (34) des moyens de maintien de gaine de câble de commande est situé à proximité de la paroi avant (11) du support (1), de sorte que la gaine de câble de commande (O) et le câble de commande (W) s'étendent, en utilisation, le long de la surface intérieure de la paroi avant (11) du support (1).

8. Dispositif suivant l'une quelconque des revendications 1 à 7, dans lequel les moyens de maintien (8) du câble de commande sont prévus sur une pièce de maintien (8) montée sur le levier de commande (7).

9. Dispositif suivant la revendication 8, dans lequel ladite pièce de maintien (8) est montée (72) de façon pivotante (81) sur le levier de commande (7).

10. Dispositif suivant la revendication 8 ou la revendication 9, dans lequel la paroi supérieure (15) du support (1) comporte, à une position sensiblement en face de ladite pièce de maintien (8), une ouverture (18) d'extraction de câble de commande, dont le diamètre est supérieur à celui de la tête de retenue (S) du câble de commande.

11. Dispositif suivant l'une quelconque des revendications 8 à 10, dans lequel la pièce de maintien (8) présente sur sa face inférieure une surface inclinée (85) formée et disposée pour guider la tête de retenue (S) lors de l'insertion du câble de commande et de la gaine (W, O) pour le raccordement du câble de commande (W) au levier de commande (7), à côté et le long du côté ouvert (84) de l'orifice de réception de câble (83) et du logement de retenue (82), de sorte que, lorsque la tête de retenue (S) dépasse l'extrémité de l'ouverture latérale (84), le câble de commande (W) peut pénétrer par cette ouverture dans l'orifice (83) de réception de câble.

**Patentansprüche**

1. Bremshebelvorrichtung für eine Fahrradbremse, mit einem Betätigungshebel (7), der schwenkbar (bei 6) in einem hohlen Stützteil (1) befestigt ist, welches eine Vorderwand (11), eine Rückwand (12), ein Paar von Seitenwänden (13, 14) und eine Oberwand (15) aufweist; und mit einer Einspannvorrichtung (2, 5) für den Eingriff in eine Befestigungsvorrichtung (3) am Stützteil (1), um beim Betrieb der Vorrichtung das Stützteil (1) an einer Lenkstange (H) zu befestigen; wobei der Betätigungshebel (7) eine Stützvorrichtung (8) aufweist, um im Betrieb ein Ende eines Betätigungskabels (W) zu halten, welches vom anderen, am Bremsmechanismus befestigbaren Ende des Betätigungskabels (W) entfernt liegt, wobei die Stützvorrichtung (8) eine Aufnahmeöffnung (82) zum Aufnehmen und Halten des Haltekopfes (S) des Betätigungskabels (W) im Betrieb aufweist, und eine Kabelaufnahmebohrung (83) zum Aufnehmen des Betätigungskabels (W) dadurch, wobei die Kabelaufnahmebohrung (83) im Durchmesser kleiner ist als die Aufnahmeöffnung (82) und der Haltekopf (S), wobei die Aufnahmeöffnung (82) und die Kabelaufnahmebohrung (83) auf einer Seite radial nach außen offen sind (84); und wobei das Stützteil (1) eine Stützvorrichtung (3) für einen Außenanschlag (10) der Außenhülle (O) des Betätigungskabels (W) aufweist, dadurch gekennzeichnet, daß die Betätigungskabelhüllenstützvorrichtung (3) so zum Abstützen des Außenhüllenanschlags (10) geformt und angeordnet ist, daß sich die Betätigungskabelaußenhülle (O) und das Betätigungskabel (W) darin innerhalb des Stützteils (1) im wesentlichen direkt zum Boden des Stützteils (1) erstrecken können, an welchem das Stützteil (1) an der Lenkstange (H) befestigt ist, so daß im Betrieb, wenn die Vorrichtung an einem gekrümmten Lenkstangenabschnitt (H) befestigt ist, sich das Betätigungskabel (W) und seine Hülle (O) vom Inneren des Stützteils direkt in das Innere der Lenkstange (H) erstrecken kann, ohne irgend eine abrupte Änderung seiner Richtung, wobei die Betätigungskabelhüllenstützvorrichtung (3) auch mit einer Führungsvorrichtung (9) in der Nähe einer Durchgangsbohrung (34) in der Hüllenstützvorrichtung (3) versehen ist, durch welche sich das Betätigungskabel (W) vom Außenanschlag (10) der Hülle (O) zum Betätigungshebel (5) erstreckt, wobei die Durchgangsbohrung (34) im Durchmesser größer ist als der Betätigungskabelhaltekopf (S), und die Führungsvorrichtung (9) so ausgebildet und angeordnet ist, daß sie den Haltekopf (S) des Betätigungskabels (W) und die Außenhüllenstützvorrichtung (10) beim Einführen des Betätigungskabels (W) und der Hülle (O) zum Verbinden des Betätigungskabels (W) mit dem Bremsbetätigungshebel (7) in die Durchgangsbohrung (34) der Hüllenstützvorrichtung (3) führt.

2. Vorrichtung nach Anspruch 1, dadurch gekennzeichnet, daß die Betätigungskabelhüllenstützvorrichtung auf der Befestigungsvorrichtung (3) befestigt ist.

3. Vorrichtung nach Anspruch 2, dadurch gekennzeichnet, daß die Befestigungsvorrichtung die Form eines Teils (3) hat mit einem aufrechten Teil (33), der sich zur Oberwandung (15) des Stützteils (1) erstreckt, wobei der Betätigungshebel (7) schwenkbar auf einer Betätigungshebelschwenkwelle (6) befestigt ist, die durch das Befestigungsteil (3) getragen wird.

4. Vorrichtung nach Anspruch 2 oder 3, dadurch gekennzeichnet, daß die Befestigungsvorrichtung (3) die Form eines im wesentlichen plattenförmigen Teils hat, welches zu seinem ersten Ende (32) nahe der Vorderwandung (11) des Stützteils (1) nach oben geneigt ist, wobei der nach oben geneigte Teil so ausgebildet ist, daß er den Außenhüllenanschlag (10) abstützt.

5. Vorrichtung nach einem der Ansprüche 1 bis 4, dadurch gekennzeichnet, daß der Betätigungshebel (7) schwenkbar zwischen den Seitenwänden (13, 14) des Stützteils (1) auf einer Betätigungshebelschwenkwelle (6) gelagert ist.

6. Vorrichtung nach einem der Ansprüche 1 bis 5, dadurch gekennzeichnet, daß die Vorderwand (11) des Stützteils (1) eine Aufnahmebohrung (17) aufweist und die Rückwand (12) mit einer Öffnung (16) versehen ist, wobei die Befestigungsvorrichtung (3) im Stützteil (1) getragen wird durch Eingriff der Aufnahmebohrung (17) und der Öffnung (16), so daß ein Anziehen der Einspannvorrichtung (2, 5) das Befestigungsteil (3) in seiner Stellung bezüglich der Vorder- und Rückwand (11, 12) sichert, während das Stützteil (1) mit der Befestigungsvorrichtung (3) an der Lenkstange (*H*) angeklemmt wird.

7. Vorrichtung nach einem der Ansprüche 1 bis 6, dadurch gekennzeichnet, daß die Betätigungskabelhüllenstützvorrichtungsdurchgangsbohrung (34) in der Nähe der Vorderwand (11) des Stützteils (1) angeordnet ist, so daß die Betätigungskabelhülle (*O*) und das Betätigungskabel (*W*) sich im Betrieb längs der Innenfläche der Vorderwandung (11) des Stützteils (1) erstrecken.

8. Vorrichtung nach einem der Ansprüche 1 bis 7, dadurch gekennzeichnet, daß die Betätigungskabelstützvorrichtung (8) auf einer am Betätigungshebel (7) befestigten Stützvorrichtung (8) vorgesehen ist.

9. Vorrichtung nach Anspruch 8, dadurch gekennzeichnet, daß das Stützteil (8) schwenkbar (81) auf dem Betätigungshebel (7) befestigt (72) ist.

10. Vorrichtung nach Anspruch 8 oder 9, dadurch gekennzeichnet, daß die Oberwand (15) des Stützteils (1) gegenüber dem Stützteil (9) eine Betätigungskabel-Herauszieh-Öffnung (18) aufweist, die im Durchmesser größer ist als der Betätigungskabelhaltekopf (*S*).

11. Vorrichtung nach einem der Ansprüche 8 bis 10, dadurch gekennzeichnet, daß das Stützteil (8) an seiner Unterseite eine geneigte Fläche (85) aufweist, die so ausgebildet und angeordnet ist, daß sie beim Einführen des Betätigungskabels und der Hülle (*W*, *O*) zum Verbinden des Betätigungskabels (*W*) mit dem Betätigungshebel (7) den Haltekopf (*S*) über und entlang der offenen Seite (84) der Kabelaufnahmebohrung (83) und Aufnahmebohrung (82) führt, so daß, wenn der Haltekopf (*S*) das Ende der Seitenöffnung (84) passiert, der Betätigungsdraht (*W*) dadurch hindurch in die Kabelaufnahmebohrung (83) rutschen kann.

0 051 973

FIG. 1

FIG.2

FIG.3

1

**0 051 973**

FIG. 4

FIG. 5

FIG. 7

FIG. 6

FIG. 8

FIG. 9

FIG. 10

2

FIG. 11